# EUROPÄISCHE PATENTSCHRIFT

(11) **EP 1 702 925 B1**
(45) Veröffentlichungstag und Bekanntmachung des Hinweises auf die Patenterteilung: **11.08.2010**
(21) Anmeldenummer: 06111068.0
(22) Anmeldetag: 14.03.2006
(51) Int. Cl.: C07F 19/00, B01D 15/00, C02F 1/00

(54) **Flüssigkeitsabsorption durch metallorganische Gerüstmaterialien**
Absorption of liquids by metal organic framework materials
Absorption des liquides par des materiaux organométalliques

(30) Priorität: 16.03.2005 DE 102005012087
(43) Veröffentlichungstag der Anmeldung: 20.09.2006
(60) Teilanmeldung: 09178471.0
(73) Patentinhaber: BASF SE, 67056 Ludwigshafen (DE)
(72) Erfinder: Müller, Ulrich, 67435, Neustadt (DE); Hesse, Michael, 67549, Worms (DE); Pütter, Hermann, 67433, Neustadt (DE)

(56) Entgegenhaltungen:
- EP-A- 0 790 253
- WO-A-02/070526
- WO-A-2004/101575
- WO-A1-82/04271
- CA-A- 2 231 706
- FR-A- 2 708 002
- GB-A- 1 552 602

## Beschreibung

Die vorliegende Erfindung betrifft Verfahren zum absorptiven Aufnehmen von Flüssigkeiten unter Verwendung porösen metallorganischen Gerüstmaterials.

Es werden häufig Feststoffe benötigt, um Flüssigkeiten in oder an sich zu binden, damit gewährleistet ist, dass diese Flüssigkeiten sich nicht weiter ausbreiten, in Kontakt mit anderen Flüssigkeiten oder Feststoffen treten oder die vorgenannten Flüssigkeiten "handhabbar" zu machen.

Hierbei sind beispielhaft Fälle zu nennen, bei denen Flüssigkeiten unbeabsichtigt verschüttet werden, wie dies im Labor geschehen kann. Auch das Fallenlassen von Behältern wie Glasflaschen führt dazu, dass sich Flüssigkeit auf Tischbänken oder dem Fußboden an einen Feststoff gebunden werden muss. Hierbei handelt es sich bei der Flüssigkeit häufig um ein anorganisches oder organisches Lösemittel.

Ein weiterer häufiger Fall, bei dem Flüssigkeiten in oder an Feststoffen aufgenommen werden müssen, um eine Kontamination des Bodens oder der Luft zu vermeiden, tritt bei Verkehrsunfällen auf. Hier müssen austretende Flüssigkeiten, wie Benzin, Motorenöl, Getriebeöl und dergleichen entsprechend behandelt werden.

Weiterhin ist das Aufnehmen von Flüssigkeiten wie Desinfektionsmitteln oder Geruchsstoffen in Feststoffen von Vorteil, da durch den Feststoff die oben erwähnte "Handhabbarkeit" erleichtert und eine kontrollierte Abgabe der Flüssigkeit über die Gasphase an die Umgebung, beispielsweise die Raumluft, durch den Feststoff gesteuert werden kann.

Feststoffe zum Aufnehmen sind im Stand der Technik bekannt. Hierzu zählen beispielsweise Ionenaustauscher und Zeolithe. Ein gängiges Absorbens für Flüssigkeiten ist unter dem Namen Chemizorb® der Fa. Merck erhältlich.

Nachteilig bei den verwendeten Feststoffen in Verfahren zum absorptiven Aufnehmen von Flüssigkeiten ist deren limitiertes Aufnahmevermögen und Quelleigenschaften bei der Aufnahme von Flüssigkeiten.

Die Aufgabe der vorliegenden Erfindung besteht darin, ein verbessertes Verfahren unter Verwendung eines festen Absorbens bereitzustellen, das zumindest teilweise bessere Eigenschaften gegenüber dem Stand der Technik aufweist.

Die Aufgabe wird gelöst durch ein Verfahren nach Anspruch 1

Es hat sich gezeigt, dass poröse metallorganische Gerüstmaterialien nach der vorliegenden Erfindung vorteilhafte Eigenschaften bei dem absorptiven Aufnehmen von Flüssigkeiten aufweisen.

Vorteilhafterweise handelt es sich bei der Flüssigkeit um Flüssigkeitsabfall, wie oben beschrieben. Weiterhin bevorzugt handelt es sich bei der Flüssigkeit um ein Desinfektionsmittel, einen Geruchsstoff, ein anorganisches oder organisches Lösemittel, Treibstoff - insbesondere Benzin oder Diesel-, Hydraulik-, Kühler-, Bremsflüssigkeit oder ein Öl, insbesondere Maschinenöl.

Ebenso bevorzugt enthält die zu absorbierende Flüssigkeit einen gegebenenfalls halogenierten aliphatischen oder aromatischen, cyclischen oder acyclischen Kohlenwasserstoff oder Mischungen hiervon.

Insbesondere bevorzugt enthält die Flüssigkeit Aceton, Acetonitril, Anilin, Anisol, Benzol, Benzonitril, Brombenzol, Butanol, tert.-Butanol, Chinolin, Chlorbenzol, Chloroform, Cyclohexan, Diethylenglykol, Diethylether, Dimethylacetamid, Dimethylformamid, Dimethylsulfoxid, Dioxan, Eisessig, Essigsäureanhydrid, Essigsäureethylester, Ethanol, Ethylencarbonat, Ethylendichlorid, Ethylenglycol, Ethylenglycoldimethylether, Formamid, Hexan, Isopropanol, Methanol, Methoxypropanol, 3-Methyl-1-butanol, Methylenchlorid, Methylethylketon, N-Methylformamid, N-Methylpyrrolidon, Nitrobenzol, Nitromethan, Piperidin, Propanol, Propylencarbonat, Pyridin, Schwefelkohlenstoff, Sulfolan, Tetrachlorethen, Tetrachlorkohlenstoff, Tetrahydrofuran, Toluol, 1,1,1-Trichlorethan, Trichlorethylen, Triethylamin, Triethylenglycol, Triglyme, Wasser oder Mischungen hiervon.

Der MOF kann wie weiter unten näher erläutert in Pulverform oder als Formkörper vorliegen. Das in Kontakt bringen erfolgt durch einfaches Bedecken beispielsweise ausgelaufener oder verschütteter Flüssigkeit. Hierbei wird zweckmäßigerweise auf die entsprechende Lache geschüttet.

Ein weiterer Aspekt der vorliegenden Erfindung liegt darin, dass nach der Absorption der Flüssigkeit der MOF dasselbe Volumen wie vor der Absorption aufweisen kann. Es tritt somit durch die Aufnahme der Flüssigkeit insbesondere kein Quellen auf. Dies ist insbesondere ein Vorteil gegenüber Ionenaustauschern.

Ein weiterer Aspekt betrifft insbesondere MOF, bei denen mindestens ein Metallion Cu darstellt. Hier kann vorteilhafterweise eine Sättigung des MOF durch die Flüssigkeit durch eine Farbänderung erkannt werden.

Metallorganische Gerüstmaterialen (MOF) werden beispielsweise beschrieben in US 5,648,508, EP-A-0 790 253, M. O-Keeffe et al., J. Sol. State Chem., 152 (2000), Seite 3 bis 20, H. Li et al., Nature 402, (1999), Seite 276, M. Eddaoudi et al., Topics in Catalysis 9, (1999), Seite 105 bis 111, B. Chen et al., Science 291, (2001), Seite 1021 bis 1023 DE-A-101 11 230, WO 02/070526 und CA 2231706.

Die MOF's gemäß der vorliegenden Erfindung enthalten Poren, insbesondere Mirko- und/oder Mesoporen. Mikroporen sind definiert als solche mit einem Durchmesser von 2 nm oder kleiner und Mesoporen sind definiert durch einen Durchmesser im Bereich von 2 bis 50 nm, jeweils entsprechend nach der Definition, wie sie Pure Applied Chem. 45, Seite 71, insbesondere auf Seite 79 (1976) angegeben ist. Die Anwesenheit von Mikro- und/oder Mesoporen kann mit Hilfe von Sorptionsmessungen überprüft werden, wobei diese Messungen die Aufnahmekapazität der MOF für Stickstoff bei 77 Kelvin gemäß DIN 66131 und/oder DIN 66134 bestimmt.

Vorzugsweise beträgt die spezifische Oberfläche - berechnet nach dem Langmuir-Modell gemäß DIN 66135 (DIN 66131, 66134) für ein MOF in Pulverform bei mehr als 5 m²/g, mehr bevorzugt über 10 m²/g, mehr bevorzugt mehr als 50 m²/g, weiter mehr bevorzugt mehr als 500 m²/g, weiter mehr bevorzugt mehr als 1000 m²/g und besonders bevorzugt mehr als 1500 m²/g.

MOF Formkörper können eine niedrigere spezifische Oberfläche besitzen; vorzugsweise jedoch mehr als 10 m²/g, mehr bevorzugt mehr als 50 m²/g, weiter mehr bevorzugt mehr als 500 m²/g.

Die Metallkomponente im Gerüstmaterial nach der vorliegenden Erfindung ist ausgewählt aus Zn, Al und Cu bzw. die Ionen dieser Elemente.

Der Begriff "mindestens zweizähnige organische Verbindung" bezeichnet eine organische Verbindung, die mindestens eine funktionelle Gruppe enthält, die in der Lage ist, zu einem gegebenen Metallion mindestens zwei, bevorzugt zwei koordinative Bindungen, und/oder zu zwei oder mehr, bevorzugt zwei Metallatomen jeweils eine koordinative Bindung auszubilden.

Als funktionelle Gruppen gemäß der vorliegenden Erfindung, über die die genannten koordinativen Bindungen ausgebildet werden kann, ist CO₂H als funktionelle Gruppe.

Die mindestens zwei funktionellen Gruppen können grundsätzlich an jede geeignete organische Verbindung gebunden sein, solange gewährleistet ist, dass die diese funktionellen Gruppen aufweisende organische Verbindung zur Ausbildung der koordinativen Bindung und zur Herstellung des Gerüstmaterials befähigt ist.

Die organischen Verbindungen, die die mindestens zwei funktionellen Gruppen enthalten, sind in Anspruch 1 genannt.

In der vorliegenden Erfindung kommen Isophtalsäure, Terephthalsäure, 1,3,5-Benzoltricarbonsäure, und -2,6 und Naphthalindicarbonsäure zum Einsatz.

Neben diesen mindestens zweizähnigen organischen Verbindungen kann der MOF auch eine oder mehrere einzähnige Liganden umfassen.

Geeignete Lösemittel zur Herstellung der MOF sind u.a. Ethanol, Dimethylformamid, Toluol, Methanol, Chlorbenzol, Diethylformamid, Dimethylsulfoxid, Wasser, Wasserstoffperoxid, Methylamin, Natronlauge, N-Methylpolidonether, Acetonitril, Benzylchlorid, Triethylamin, Ethylenglykol und Gemische hiervon. Weitere Metallionen, mindestens zweizähnige organische Verbindungen und Lösemittel für die Herstellung von MOF sind u.a. in US-A 5,648,508 oder DE-A 101 11 230 beschrieben.

Die Porengröße des MOF kann durch Wahl des geeigneten Liganden und/oder der mindestens zweizähnigen organischen Verbindung gesteuert werden. Allgemein gilt, dass je größer die organische Verbindung desto größer die Porengröße ist. Vorzugsweise beträgt die Porengröße von 0,2 nm bis 30 nm, besonders bevorzugt liegt die Porengröße im Bereich von 0,3 nm bis 3 nm bezogen auf das kristalline Material.

In einem MOF-Formkörper treten jedoch auch größere Poren auf, deren Größenverteilung variieren kann. Vorzugsweise wird jedoch mehr als 50 % des gesamten Porenvolumens, insbesondere mehr als 75 %, von Poren mit einem Porendurchmesser von bis zu 1000 nm gebildet. Vorzugsweise wird jedoch ein Großteil des Porenvolumens von Poren aus zwei Durchmesserbereichen gebildet. Es ist daher weiter bevorzugt, wenn mehr als 25 % des gesamten Porenvolumens, insbesondere mehr als 50 % des gesamten Porenvolumens von Poren gebildet wird, die in einem Durchmesserbereich von 100 nm bis 800 nm liegen und wenn mehr als 15 % des gesamten Porenvolumens, insbesondere mehr als 25 % des gesamten Porenvolumens von Poren gebildet wird, die in einem Durchmesserbereich von bis zu 10 nm liegen. Die Porenverteilung kann mittels Quecksilber-Porosimetrie bestimmt werden.

Nachfolgend sind Beispiele für MOF's angegeben. Neben der Kennzeichnung des MOF, dem Metall sowie dem mindestens zweizähnigen Liganden ist weiterhin das Lösemittel sowie die Zellenparameter (Winkel α, β und γ sowie die Abstände A, B und C in Å) angegeben. Letztere wurden durch Röntgenbeugung bestimmt.

| **MOF-n** | **Inhaltsstoffe molares Verhältnis M+L** | **Solvens s** | α | β | γ | **a** | **b** | **c** | **Raumgruppe** |
|---|---|---|---|---|---|---|---|---|---|
| MOF-0 | Zn(NO₃)₂-6H₂O H₃(BTC) | Ethanol | 90 | 90 | 120 | 16.711 | 16.711 | 14.189 | P6(3)/ Mcm |
| MOF-2 | Zn(NO₃)₂-6H₂O (0.246 mmol) H₂ (BDC) 0.241 mmol) | DMF Toluen | 90 | 102.8 | 90 | 6.718 | 15.49 | 12.43 | P2(1)/n |
| MOF-3 | Zn(NO₃)₂·6H₂O (1.89 mmol) H₂ (BDC) (1.93mmol) | DMF MeOH | 99.72 | 111.11 | 108.4 | 9.726 | 9.911 | 10.45 | P-1 |
| MOF-4 | Zn(NO₃)₂·6H₂O (1.00 mmol) H₃(BTC) (0.5 mmol) | Ethanol | 90 | 90 | 90 | 14.728 | 14.728 | 14.728 | P2(1)3 |
| MOF-5 | Zn(NO₃)₂·6H₂O (2.22 mmol) H₂(BDC) (2.17 mmol) | DMF Chlor-benzen | 90 | 90 | 90 | 25.669 | 25.669 | 25.669 | Fm-3m |
| MOF-38 | Zn(NO₃)₂·6H₂O (0.27 mmol) H₃(BTC) (0.15 mmol) | DMF Chlor-benzen | 90 | 90 | 90 | 20.657 | 20.657 | 17.84 | 14cm |
| MOF-31 Zn(ADC)₂ | Zn(NO₃)₂·6H₂O 0.4 mmol H₂(ADC) 0.8 mmol | Ethanol | 90 | 90 | 90 | 10.821 | 10.821 | 10.821 | Pn(-3)m |
| MOF-12 Zn₂(ATC) | Zn(NO₃)₂·6H₂O 0.3 mmol H₄(ATC) 0.15 mmol H₄(ATC) 0.15 mmol | Ethanol | 90 | 90 | 90 | 15.745 | 16.907 | 18.167 | Pbca |
| MOF-20 ZnNDC | Zn(NO₃)₂·6H₂O 0.37 mmol H₂NDC 0.36 mmol | DMF Chlorbenzen | 90 | 92.13 | 90 | 8.13 | 16.444 | 12.807 | P2(1)/c |
| MOF-37 | Zn(NO₃)₂·6H₂O 0.2 mmol H₂NDC 0.2 mmol | DEF Chlor-benzen | 72.38 | 83.16 | 84.33 | 9.952 | 11.576 | 15.556 | P-1 |
| MOF-8 Tb₂(ADC) | Tb(NO₃)₃·5H₂O 0.10 mmol H₂ADC 0.20 mmol | DMSO MeOH | 90 | 115.7 | 90 | 19.83 | 9.822 | 19.183 | C2/c |
| MOF-9 Tb₂(ADC) | Tb(NO₃)₃·5H₂O 0.08 mmol H₂ADB 0.12 mmol | DMSO | 90 | 102.09 | 90 | 27.056 | 16.795 | 28.139 | C2/c |
| MOF-6 | Tb(NO₃)₃·5H₂O 0.30 mmol H₂ (BDC) 0.30 mmol | DMF MeOH | 90 | 91.28 | 90 | 17.599 | 19.996 | 10.545 | P21/c |
| MOF-7 | Tb(NO₃)₃·5H₂O 0.15 mmol H₂(BDC) 0.15 mmol | H₂O | 102.3 | 91.12 | 101.5 | 6.142 | 10.069 | 10.096 | P-1 |
| MOF-69A | Zn(NO₃₎₂·6H₂O 0.083 mmol 4,4'BPDC 0.041 mmol | DEF H₂O₂ MeNH₂ | 90 | 111.6 | 90 | 23.12 | 20.92 | 12 | C2/c |
| MOF-69B | Zn(NO₃)₂·6H₂O 0.083 mmol 2,6-NCD 0.041 mmol | DEF H₂O₂ MeNH₂ | 90 | 95.3 | 90 | 20.17 | 18.55 | 12.16 | C2/c |
| MOF-11 Cu₂(ATC) | Cu(NO₃)₂·2.5H₂O 0.47 mmol H₂ATC 0.22 mmol | H₂O | 90 | 93.86 | 90 | 12.987 | 11.22 | 11.336 | C2/c |
| MOF-11 Cu₂(ATC) dehydr. | | | 90 | 90 | 90 | 8.4671 | 8.4671 | 14.44 | P42/ mmc |
| MOF-14 Cu₃ (BTB) | Cu(NO₃)₂·2.5H₂O 0.28 mmol H₃BTB 0.052 mmol | H₂O DMF EtOH | 90 | 90 | 90 | 26.946 | 26.946 | 26.946 | lm-3 |
| MOF-32 | Cd(NO₃)₂·4H₂O | H₂O | 90 | 90 | 90 | 13.468 | 13.468 | 13.468 | P(-4)3m |
| MOF-33 Zn₂ (ATB) | ZnCl₂ 0.15 mmol H₄ATB 0.02 mmol | H₂O DMF EtOH | 90 | 90 | 90 | 19.561 | 15.255 | 23.404 | Imma |
| MOF-34 Ni(ATC) | Ni(NO₃)₂·6H₂O 0.24 mmol H₄ATC 0.10 mmol | H₂O NaOH | 90 | 90 | 90 | 10.066 | 11.163 | 19.201 | P2₁2₁2₁ |
| MOF-36 Zn₂ (MTB) | Zn(NO₃)₂·4H₂O 0.20 mmol H₄MTB 0.04 mmol | H₂O DMF | 90 | 90 | 90 | 15.745 | 16.907 | 18.167 | Pbca |
| MOF-39 Zn₃O(HBTB) | Zn(NO₃)₂ 4H₂O 0.27 mmol H₃BTB 0.07 mmol | H₂O DMF EtOH | 90 | 90 | 90 | 17.158 | 21.591 | 25.308 | Pnma |
| NO305 | FeCl₂·4H₂O 5.03 mmol Ameisensre. 86.90 mmol | DMF | 90 | 90 | 120 | 8.2692 | 8.2692 | 63.566 | R-3c |
| NO306A | FeCl₂·4H₂O 5.03 mmol Ameisensre. 86.90 mmol | DEF | 90 | 90 | 90 | 9.9364 | 18.374 | 18.374 | Pbcn |
| | | | | | | | | | |
| NO29 MOF-0 ähn-lich | Mn(Ac)₂·4H₂O 0.46 mmol H₃BTC 0.69 mmol | DMF | 120 | 90 | 90 | 14.16 | 33.521 | 33.521 | P-1 |
| BPR48 A2 | Zn(NO₃)₂6H₂O 0.012 mmol H₂BDC 0.012 mmol | DMSO Toluen | 90 | 90 | 90 | 14.5 | 17.04 | 18.02 | Pbca |
| BPR69 B1 | Cd(NO₃)₂ 4H₂O 0.0212 mmol H₂BDC 0.0428 mmol | DMSO | 90 | 98.76 | 90 | 14.16 | 15.72 | 17.66 | Cc |
| BPR92 A2 | Co(NO₃)₂·6H₂O 0.018 mmol H₂BDC 0.018 mmol | NMP | 106.3 | 107.63 | 107.2 | 7.5308 | 10.942 | 11.025 | P1 |
| BPR95 C5 | Cd(NO₃)₂4H₂O 0.012 mmol H₂BDC 0.36 mmol | NMP | 90 | 112.8 | 90 | 14.460 | 11.085 | 15.829 | P2(1)/n |
| Cu C₆H₄O₆ | Cu(NO₃)₂·2.5H₂O 0.370 mmol H₂BDC(OH)₂ 0.37 mmol | DMF Chlor-benzen | 90 | 105.29 | 90 | 15.259 | 14.816 | 14.13 | P2(1)/c |
| M(BTC) MOF-0 ähn-lich | Co(SO₄) H₂O 0.055 mmol H₃BTC 0.037 mmol | DMF | wie MOF-0 | | | | | | |
| Tb(C₆H₄O₆) | Tb(NO₃)₃·5H₂O 0.370 mmol H₂(C₆H₄O₆) 0.56 mmol | DMF Chlor-benzen | 104.6 | 107.9 | 97.147 | 10.491 | 10.981 | 12.541 | P-1 |
| Zn (C₂O₄) | ZnCl₂ 0.370 mmol Oxalsäure 0.37 mmol | DMF Chlor-benzen | 90 | 120 | 90 | 9.4168 | 9.4168 | 8.464 | P(-3)1m |
| Co(CHO) | Co(NO₃)₂·5H₂O 0.043 mmol Ameisensre. 1.60 mmol | DMF | 90 | 91.32 | 90 | 11.328 | 10.049 | 14.854 | P2(1)/n |
| Cd(CHO) | Cd(NO₃)₂-4H₂O 0.185 mmol formic acid 0.185 mmol | DMF | 90 | 120 | 90 | 8.5168 | 8.5168 | 22.674 | R-3c |
| Cu(C₃H₂O₄) | Cu(NO₃)₂·2.5H₂O 0.043 mmol Malonsre. 0.192 mmol | DMF | 90 | 90 | 90 | 8.366 | 8.366 | 11.919 | P43 |
| Zn₆ (NDC)₅ MOF-48 | Zn(NO₃)₂-6H₂O 0.097 mmol 14 NDC 0.069 mmol | DMF Chlor-benzen H₂O₂ | 90 | 95.902 | 90 | 19.504 | 16.482 | 14.64 | C2/m |
| | | | | | | | | | |
| MOF-47 | Zn(NO₃)₂6H₂O 0.185 mmol H₂(BDC[CH₃]₄) 0.185 mmol | DMF Chlor-benzen H₂O₂ | 90 | 92.55 | 90 | 11.303 | 16.029 | 17.535 | P2(1)/c |
| M025 | Cu(NO₃)₂·2.5H₂O 0.084 mmol BPhDC 0.085 mmol | DMF | 90 | 112.0 | 90 | 23.880 | 16.834 | 18.389 | P2(1)/c |
| Cu-Thio | Cu(NO₃)₂·2.5H₂O 0.084 mmol Thiophen Dicarbonsäure. 0.085 mmol | DEF | 90 | 113.6 | 90 | 15.474 7 | 14.514 | 14.032 | P2(1)/c |
| CIBDC1 | Cu(NO₃)₂·2.5H₂O 0. 084 mmol H₂(BDCCl₂) 0.085 mmol | DMF | 90 | 105.6 | 90 | 14.911 | 15.622 | 18.413 | C2/c |
| MOF-101 | Cu(NO₃)₂·2.5H₂O 0.084 mmol BrBDC 0.085 mmol | DMF | 90 | 90 | 90 | 21.607 | 20.607 | 20.073 | Fm3m |
| Zn₃(BTC)₂ | ZnCl₂ 0.033 mmol H₃BTC 0.033 mmol | DMF EtOH Base zugegeben | 90 | 90 | 90 | 26.572 | 26.572 | 26.572 | Fm-3m |
| MOF-j | Co(CH₃CO₂)₂·4H₂ (1.65 mmol) H₃(BZC) (0.95 mmol) | H₂O | 90 | 112.0 | 90 | 17.482 | 12.963 | 6.559 | C2 |
| MOF-n | Zn(NO₃)₂·6H₂O H₃ (BTC) | Ethanol | 90 | 90 | 120 | 16.711 | 16.711 | 14.189 | P6(3)/mcm |
| PbBDC | Pb(NO₃)₂ (0.181 mmol) H₂(BDC) (0.181 mmol) | DMF Ethanol | 90 | 102.7 | 90 | 8.3639 | 17.991 | 9.9617 | P2(1)/n |
| Znhex | Zn(NO₃)₂·6H₂O (0.171 mmol) H₃BTB (0.114 mmol) | DMF p-Xylen Ethanol | 90 | 90 | 120 | 37.116 5 | 37.117 | 30.019 | P3(1)c |
| AS16 | FeBr₂ 0.927 mmol H₂(BDC) 0.927 mmol | DMF anhydr. | 90 | 90.13 | 90 | 7.2595 | 8.7894 | 19.484 | P2(1)c |
| AS27-2 | FeBr₂ 0.927 mmol H₃(BDC) 0.464 mmol | DMF anhydr. | 90 | 90 | 90 | 26.735 | 26.735 | 26.735 | Fm3m |
| AS32 | FeCl₃ 1.23 mmol H₂(BDC) 1.23 mmol | DMF anhydr. Ethanol | 90 | 90 | 120 | 12.535 | 12.535 | 18.479 | P6(2)c |
| | | | | | | | | | |
| AS54-3 | FeBr₂ 0.927 BPDC 0.927 mmol | DMF anhydr. n-Propanol | 90 | 109.98 | 90 | 12.019 | 15.286 | 14.399 | C2 |
| AS61-4 | FeBr₂ 0.927 mmol m-BDC 0.927 mmol | Pyridin anhydr. | 90 | 90 | 120 | 13.017 | 13.017 | 14.896 | P6(2)c |
| AS68-7 | FeBr₂ 0.927 mmol m-BDC 1.204 mmol | DMF anhydr. Pyridin | 90 | 90 | 90 | 18.340 7 | 10.036 | 18.039 | Pca2₁ |
| Zn(ADC) | Zn(NO₃)₂·6H₂O 0.37 mmol H₂(ADC) 0.36 mmol | DMF Chlor-benzen | 90 | 99.85 | 90 | 16.764 | 9.349 | 9.635 | C2/c |
| MOF-12 Zn₂ (ATC) | Zn(NO₃)₂·6H₂O 0.30 mmol H₄(ATC) 0.15 mmol | Ethanol | 90 | 90 | 90 | 15.745 | 16.907 | 18.167 | Pbca |
| MOF-20 ZnNDC | Zn(NO₃)₂·6H₂O 0.37 mmol H₂NDC 0.36 mmol | DMF Chlor-benzen | 90 | 92.13 | 90 | 8.13 | 16.444 | 12.807 | P2(1)/c |
| MOF-37 | Zn(NO₃)₂·6H₂O 0.20 mmol H₂NDC 0.20 mmol | DEF Chlor-benzen | 72.38 | 83.16 | 84.33 | 9.952 | 11.576 | 15.556 | P-1 |
| Zn(NDC) (DMSO) | Zn(NO₃)₂-6H₂O H₂NDC | DMSO | 68.08 | 75.33 | 88.31 | 8.631 | 10.207 | 13.114 | P-1 |
| Zn(NDC) | Zn(NO₃)₂-6H₂O H₂NDC | | 90 | 99.2 | 90 | 19.289 | 17.628 | 15.052 | C2/c |
| Zn(HPDC) | Zn(NO₃)₂-4H₂O 0.23 mmol H₂(HPDC) 0.05 mmol | DMF H₂O | 107.9 | 105.06 | 94.4 | 8.326 | 12.085 | 13.767 | P-1 |
| Co(HPDC) | Co(NO₃)₂·6H₂O 0.21 mmol H₂ (HPDC) 0.06 mmol | DMF H₂O/ Ethanol | 90 | 97.69 | 90 | 29.677 | 9.63 | 7.981 | C2/c |
| Zn₃(PDC)2.5 | Zn(NO₃)₂·4H₂O 0.17 mmol H₂(HPDC) 0.05 mmol | DMF/ CIBz H₂O/ TEA | 79.34 | 80.8 | 85.83 | 8.564 | 14.046 | 26.428 | P-1 |
| Cd₂ (TPDC)2 | Cd(NO₃)₂·4H₂O 0.06 mmol H₂(HPDC) 0.06 mmol | Metha- nol/ CHP H₂O | 70.59 | 72.75 | 87.14 | 10.102 | 14.412 | 14.964 | P-1 |
| Tb(PDC)1.5 | Tb(NO₃)₃·5H₂O 0.21 mmol H₂(PDC) 0.034 mmol | DMF H₂O/ Ethanol | 109.8 | 103.61 | 100.14 | 9.829 | 12.11 | 14.628 | P-1 |
| | | | | | | | | | |
| ZnDBP | Zn(NO₃)₂·6H₂O 0.05 mmol Dibenzylphosphat 0.10 mmol | MeOH | 90 | 93.67 | 90 | 9.254 | 10.762 | 27.93 | P2/n |
| Zn₃(BPDC) | ZnBr₂ 0.021 mmol 4,4'BPDC 0.005 mmol | DMF | 90 | 102.76 | 90 | 11.49 | 14.79 | 19.18 | P21/n |
| CdBDC | Cd(NO₃)₂·4H₂O 0.100 mmol H₂(BDC) 0.401 mmol | DMF Na₂SiO ₃ (aq) | 90 | 95.85 | 90 | 11.2 | 11.11 | 16.71 | P21/n |
| Cd-mBDC | Cd(NO₃)₂·4H₂O 0.009 mmol H₂(mBDC) 0.018 mmol | DMF MeNH₂ | 90 | 101.1 | 90 | 13.69 | 18.25 | 14.91 | C2/c |
| Zn₄OBND C | Zn(NO₃)₂·6H₂O 0.041 mmol BNDC | DEF MeNH₂ H₂O₂ | 90 | 90 | 90 | 22.35 | 26.05 | 59.56 | Fmmm |
| Eu(TCA) | Eu(NO₃)₃·6H₂O 0.14 mmol TCA 0.026 mmol | DMF Chlor-benzen | 90 | 90 | 90 | 23.325 | 23.325 | 23.325 | Pm-3n |
| Tb(TCA) | Tb(NO₃)₃.6H₂O 0.069 mmol TCA 0.026 mmol | DMF Chlor-benzen | 90 | 90 | 90 | 23.272 | 23.272 | 23.372 | Pm-3n |
| Formate | Ce(NO₃)₃·6H₂O 0.138 mmol Ameisensre. 0.43 mmol | H₂O Ethanol | 90 | 90 | 120 | 10.668 | 10.667 | 4.107 | R-3m |
| | FeCl₂·4H₂O 5.03 mmol Ameisensre. 86.90 mmol | DMF | 90 | 90 | 120 | 8.2692 | 8.2692 | 63.566 | R-3c |
| | FeCl₂·4H₂O 5.03 mmol Ameisensre. 86.90 mmol | DEF | 90 | 90 | 90 | 9.9364 | 18.374 | 18.374 | Pbcn |
| | FeCl₂-4H₂O 5.03 mmol Ameisensre. 86.90 mmol | DEF | 90 | 90 | 90 | 8.335 | 8.335 | 13.34 | P-31c |
| NO330 | FeCl₂·4H₂O 0.50 mmol Ameisensre. 8.69 mmol | Formamid | 90 | 90 | 90 | 8.7749 | 11.655 | 8.3297 | Pnna |
| NO332 | FeCl₂·4H₂O 0.50 mmol Ameisensre. 8.69 mmol | DIP | 90 | 90 | 90 | 10.031 3 | 18.808 | 18.355 | Pbcn |
| | | | | | | | | | |
| NO333 | FeCl₂·4H₂O 0.50 mmol Ameisensre. 8.69 mmol | DBF | 90 | 90 | 90 | 45.275 4 | 23.861 | 12.441 | Cmcm |
| NO335 | FeCl₂·4H₂O 0.50 mmol Ameisensre. 8.69 mmol | CHF | 90 | 91.372 | 90 | 11.596 4 | 10.187 | 14.945 | P21/n |
| NO336 | FeCl₂·4H₂O 0.50 mmol Ameisensre. 8.69 mmol | MFA | 90 | 90 | 90 | 11.794 5 | 48.843 | 8.4136 | Pbcm |
| NO13 | Mn(Ac)₂·4H₂O 0.46 mmol Benzoesre. 0.92 mmol Bipyridin 0.46 mmol | Ethanol | 90 | 90 | 90 | 18.66 | 11.762 | 9.418 | Pbcn |
| NO29 MOF-0 ähnlich | Mn(Ac)₂·4H₂O 0.46 mmol H₃BTC 0.69 mmol | DMF | 120 | 90 | 90 | 14.16 | 33.521 | 33.521 | P-1 |
| Mn(hfac)₂ (O₂CC₆H₅) | Mn(Ac)₂·4H₂O 0.46 mmol Hfac 0.92 mmol Bipyridin 0.46 mmol | Ether | 90 | 95.32 | 90 | 9.572 | 17.162 | 14.041 | C2/c |
| BPR43G2 | Zn(NO₃)₂·6H₂O 0.0288 mmol H₂BDC 0.0072 mmol | DMF CH₃CN | 90 | 91.37 | 90 | 17.96 | 6.38 | 7.19 | C2/c |
| BPR48A2 | Zn(NO₃)₂ 6H₂O 0.012 mmol H₂BDC 0.012 mmol | DMSO Toluen | 90 | 90 | 90 | 14.5 | 17.04 | 18.02 | Pbca |
| BPR49B1 | Zn(NO₃)₂6H₂O 0.024 mmol H₂BDC 0.048 mmol | DMSO Methanol | 90 | 91.172 | 90 | 33.181 | 9.824 | 17.884 | C2/c |
| BPR56E1 | Zn(NO₃)₂6H₂O 0.012 mmol H₂BDC 0.024 mmol | DMSO n- Propanol | 90 | 90.096 | 90 | 14.587 3 | 14.153 | 17.183 | P2(1)/n |
| BPR68D10 | Zn(NO₃)₂6H₂O 0.0016 mmol H₃BTC 0.0064 mmol | DMSO Benzen | 90 | 95.316 | 90 | 10.062 7 | 10.17 | 16.413 | P2(1)/c |
| BPR69B1 | Cd(NO₃)₂4H₂O 0.0212 mmol H₂BDC 0.0428 mmol | DMSO | 90 | 98.76 | 90 | 14.16 | 15.72 | 17.66 | Cc |
| | | | | | | | | | |
| BPR73E4 | Cd(NO₃)₂4H₂O 0.006 mmol H₂BDC 0.003 mmol | DMSO Toluen | 90 | 92.324 | 90 | 8.7231 | 7.0568 | 18.438 | P2(1)/n |
| BPR76D5 | Zn(NO₃)₂ 6H₂O 0.0009 mmol H₂BzPDC 0.0036 mmol | DMSO | 90 | 104.17 | 90 | 14.419 1 | 6.2599 | 7.0611 | Pc |
| BPR80B5 | Cd(NO₃)₂·4H₂O 0.018 mmol H₂BDC 0.036 mmol | DMF | 90 | 115.11 | 90 | 28.049 | 9.184 | 17.837 | C2/c |
| BPR80H5 | Cd(NO₃)₂4H₂O 0.027 mmol H₂BDC 0.027 mmol | DMF | 90 | 119.06 | 90 | 11.474 6 | 6.2151 | 17.268 | P2/c |
| BPR82C6 | Cd(NO₃)₂ 4H₂O 0.0068 mmol H₂BDC 0.202 mmol | DMF | 90 | 90 | 90 | 9.7721 | 21.142 | 27.77 | Fdd2 |
| BPR86C3 | Co(NO₃)₂ 6H₂O 0.0025 mmol H₂BDC 0.075 mmol | DMF | 90 | 90 | 90 | 18.344 9 | 10.031 | 17.983 | Pca2(1) |
| BPR86H6 | Cd(NO₃)₂·6H₂O 0.010 mmol H₂BDC 0.010 mmol | DMF | 80.98 | 89.69 | 83.41 2 | 9.8752 | 10.263 | 15.362 | P-1 |
| | Co(NO₃)₂ 6H₂O | NMP | 106.3 | 107.63 | 107.2 | 7.5308 | 10.942 | 11.025 | P1 |
| BPR95A2 | Zn(NO₃)₂ 6H₂O 0.012 mmol H₂BDC 0.012 mmol | NMP | 90 | 102.9 | 90 | 7.4502 | 13.767 | 12.713 | P2(1)/c |
| CuC₆F₄O₄ | Cu(NO₃)₂·2.5H₂O 0.370 mmol H₂BDC(OH)₂ 0.37 mmol | DMF Chlor-benzen | 90 | 98.834 | 90 | 10.967 5 | 24.43 | 22.553 | P2(1)/n |
| Fe Formic | FeCl₂·4H₂O 0.370 mmol Ameisensre. 0.37 mmol | DMF | 90 | 91.543 | 90 | 11.495 | 9.963 | 14.48 | P2(1)/n |
| Mg Formic | Mg(NO₃)₂·6H₂O 0.370 mmol Ameisensre. 0.37 mmol | DMF | 90 | 91.359 | 90 | 11.383 | 9.932 | 14.656 | P2(1)/n |
| MgC₆H₄O₆ | Mg(NO₃)₂·6H₂O 0.370 mmol H₂BDC(OH)₂ 0.37 mmol | DMF | 90 | 96.624 | 90 | 17.245 | 9.943 | 9.273 | C2/c |
| Zn C₂H₄BDC MOF-38 | ZnCl₂ 0.44 mmol CBBDC 0.261 mmol | DMF | 90 | 94.714 | 90 | 7.3386 | 16.834 | 12.52 | P2(1)/n |
| MOF-49 | ZnCl₂ 0.44 mmol m-BDC 0.261 mmol | DMF CH₃CN | 90 | 93.459 | 90 | 13.509 | 11.984 | 27.039 | P2/c |
| MOF-26 | Cu(NO₃)₂·5H₂O 0.084 mmol DCPE 0.085 mmol | DMF | 90 | 95.607 | 90 | 20.879 7 | 16.017 | 26.176 | P2(1)/n |
| MOF-112 | Cu(NO₃)₂·2.5H₂O 0.084 mmol *o*-Br-*m*-BDC 0.085 mmol | DMF Ethanol | 90 | 107.49 | 90 | 29.324 1 | 21.297 | 18.069 | C2/c |
| MOF-109 | Cu(NO₃)₂·2.5H₂O 0.084 mmol KDB 0.085 mmol | DMF | 90 | 111.98 | 90 | 23.880 1 | 16.834 | 18.389 | P2(1)/c |
| MOF-111 | Cu(NO₃)₂·2.5H₂O 0.084 mmol o-BrBDC 0.085 mmol | DMF Ethanol | 90 | 102.16 | 90 | 10.676 7 | 18.781 | 21.052 | C2/c |
| MOF-110 | Cu(NO₃)₂·2.5H₂O 0.084 mmol Thiophen Dicarbonsre. 0.085 mmol | DMF | 90 | 90 | 120 | 20.065 2 | 20.065 | 20.747 | R-3/m |
| MOF-107 | Cu(NO₃)₂·2.5H₂O 0.084 mmol Thiophen Dicarbonsre. 0.085 mmol | DEF | 104.8 | 97.075 | 95.20 6 | 11.032 | 18.067 | 18.452 | P-1 |
| MOF-108 | Cu(NO₃)₂·2.5H₂O 0.084 mmol Thiophen Dicarbonsre. 0.085 mmol | DBF/ Methanol | 90 | 113.63 | 90 | 15.474 7 | 14.514 | 14.032 | C2/c |
| MOF-102 | Cu(NO₃)₂·2.5H₂O 0.084 mmol H₂(BDCCl₂) 0.085 mmol | DMF | 91.63 | 106.24 | 112.0 1 | 9.3845 | 10.794 | 10.831 | P-1 |
| Clbdc1 | Cu(NO₃)₂·2.5H₂O 0.084 mmol H₂(BDCCl₂) 0.085 mmol | DEF | 90 | 105.56 | 90 | 14.911 | 15.622 | 18.413 | P-1 |
| Cu(NMOP) | Cu(NO₃)₂·2.5H₂O 0.084 mmol NBDC 0.085 mmol | DMF | 90 | 102.37 | 90 | 14.923 8 | 18.727 | 15.529 | P2(1)/m |
| Tb(BTC) | Tb(NO₃)₃·5H₂O 0.033 mmol H₃BTC 0.033 mmol | DMF | 90 | 106.02 | 90 | 18.698 6 | 11.368 | 19.721 | |
| Zn₃(BTC)₂ Honk | ZnCl₂ 0.033 mmol H₃BTC 0.033 mmol | DMF Ethanol | 90 | 90 | 90 | 26.572 | 26.572 | 26.572 | Fm-3m |
| Zn₄O(NDC) | Zn(NO₃)₂·4H₂O 0.066 mmol 14NDC 0.066 mmol | DMF Ethanol | 90 | 90 | 90 | 41.559 4 | 18.818 | 17.574 | aba2 |
| CdTDC | Cd(NO₃)₂·4H₂O 0.014 mmol Thiophen 0.040 mmol DABCO 0.020 mmol | DMF H₂O | 90 | 90 | 90 | 12.173 | 10.485 | 7.33 | Pmma |
| IRMOF-2 | Zn(NO₃)₂·4H₂O 0.160 mmol o-Br-BDC 0.60 mmol o-Br-BDC 0.60 mmol | DEF | 90 | 90 | 90 | 25.772 | 25.772 | 25.772 | Fm-3m |
| IRMOF-3 | Zn(NO₃)₂·4H₂O 0.20 mmol H₂N-BDC 0.60 mmol | DEF Ethanol | 90 | 90 | 90 | 25.747 | 25.747 | 25.747 | Fm-3m |
| IRMOF-4 | Zn(NO₃)₂·4H₂O 0.11 mmol [C₃H₇O]₂-BDC 0.48 mmol | DEF | 90 | 90 | 90 | 25.849 | 25.849 | 25.849 | Fm-3m |
| IRMOF-5 | Zn(NO₃)₂·4H₂O 0.13 mmol [CsH₁₁O]₂-BDC 0.50 mmol | DEF | 90 | 90 | 90 | 12.882 | 12.882 | 12.882 | Pm-3m |
| IRMOF-6 | Zn(NO₃)₂·4H₂O 0.20 mmol [C₂H₄]-BOC 0.60 mmol | DEF | 90 | 90 | 90 | 25.842 | 25.842 | 25.842 | Fm-3m |
| IRMOF-7 | Zn(NO₃)₂·4H₂O 0.07 mmol 1,4NDC 0.20 mmol | DEF | 90 | 90 | 90 | 12.914 | 12.914 | 12.914 | Pm-3m |
| IRMOF-8 | Zn(NO₃)₂·4H₂O 0.55 mmol 2,6NDC 0.42 mmol | DEF | 90 | 90 | 90 | 30.092 | 30.092 | 30.092 | Fm-3m |
| IRMOF-9 | Zn(NO₃)₂·4H₂O 0.05 mmol BPDC 0.42 mmol | DEF | 90 | 90 | 90 | 17.147 | 23.322 | 25.255 | Pnnm |
| IRMOF-10 | Zn(NO₃)₂·4H₂O 0.02 mmol BPDC 0.012 mmol | DEF | 90 | 90 | 90 | 34.281 | 34.281 | 34.281 | Fm-3m |
| IRMOF-11 | Zn(NO₃)₂·-4H₂O 0.05 mmol HPDC 0.20 mmol | DEF | 90 | 90 | 90 | 24.822 | 24.822 | 56.734 | R-3m |
| IRMOF-12 | Zn(NO₃)₂·4H₂O 0.017 mmol HPDC 0.12 mmol | DEF | 90 | 90 | 90 | 34.281 | 34.281 | 34.281 | Fm-3m |
| IRMOF-13 | Zn(NO₃)₂·4H₂O 0.048 mmol PDC | DEF | 90 | 90 | 90 | 24.822 | 24.822 | 56.734 | R-3m |
| IRMOF-14 | Zn(NO₃)₂·4H₂O 0.17 mmol PDC 0.12 mmol | DEF | 90 | 90 | 90 | 34.381 | 34.381 | 34.381 | Fm-3m |
| IRMOF-15 | Zn(NO₃)₂·4H₂O 0.063 mmol TPDC 0.025 mmol | DEF | 90 | 90 | 90 | 21.459 | 21.459 | 21.459 | Im-3m |
| IRMOF-16 | Zn(NO₃)₂·4H₂O 0.0126 mmol TPDC 0.05 mmol | DEF NMP | 90 | 90 | 90 | 21.49 | 21.49 | 21.49 | Pm-3m |

- ADC: Acetylenedicarbonsäure
- NDC: Naphtalindicarbonsäure
- BDC: Benzoldicarbonsäure
- ATC: Adamantantetracarbonsäure
- BTC: Benzoltricarbonsäure
- BTB: Benzoltribenzoesäure

- MTB: Methantetrabenzoesäure
- ATB: Adamantantetrabenzoesäure
- ADB: Adamantandibenzoesäure

Weitere MOF sind MOF-177 und MOF-178, welche in der Literatur beschrieben sind.

Insbesondere bevorzugt ist ein poröses metallorganisches Gerüstmaterial, bei dem Zn oder Cu als Metallion und die mindestens zweizähnige organische Verbindungen Terephtalsäure, Isophtalsäure, 2,6-Naphthalindicarbonsäure oder 1,3,5-Benzoltricarbonsäure ist.

Neben der konventionellen Methode zur Herstellung der MOF, wie sie beispielsweise in US 5,648,508 beschrieben ist, können diese auch auf elektrochemischem Wege hergestellt werden. Diesbezüglich wird auf DE-A 103 55 087 sowie WO-A 2005/049892 verwiesen. Die auf diesem Weg hergestellten MOFs weisen besonders gute Eigenschaften in Zusammenhang mit der Adsorption und Desorption von chemischen Stoffen, insbesondere von Gasen. Sie unterscheiden sich somit von denen, die konventionell hergestellt werden, auch wenn diese aus den gleichen organischen und Metallionenbestandteilen gebildet werden und sind daher als neue Gerüstmaterialien zu betrachten. Im Rahmen der vorliegenden Erfindung sind elektrochemisch hergestellte MOFs besonders bevorzugt.

Demgemäß betrifft die elektrochemische Herstellung ein kristallines poröses metallorganischen Gerüstmaterial, enthaltend mindestens eine an mindestens ein Metallion koordinativ gebundene, mindestens zweizähnige organische Verbindung, welches in einem Reaktionsmedium erhalten wird, enthaltend die mindestens eine zweizähnige organische Verbindung, wobei mindestens ein Metallion durch Oxidation mindestens einer das entsprechende Metall enthaltenden Anode erzeugt wird.

Der Begriff "elektrochemische Herstellung" bezeichnet ein Herstellverfahren, bei dem die Bildung mindestens eines Reaktionsproduktes mit der Wanderung von elektrischen Ladungen oder dem Auftreten von elektrischen Potentialen verbunden ist.

Der Begriff "mindestens ein Metallion", wie er im Zusammenhang mit der elektrochemischen Herstellung verwendet wird, bezeichnet Ausführungsformen, gemäß denen mindestens ein Ion eines Metalls oder mindestens ein Ion eines ersten Metalls und mindestens ein Ion mindestens eines vom ersten Metall verschiedenen zweiten Metalls durch anodische Oxidation bereit gestellt werden.

Demgemäß umfasst die elektrochemische Herstellung Ausführungsformen, in denen mindestens ein Ion mindestens eines Metalls durch anodische Oxidation und mindestens ein Ion mindestens eines Metalls über ein Metallsalz bereit gestellt werden, wobei das mindestens eine Metall im Metallsalz und das mindestens eine Metall, das über anodische Oxidation als Metallion bereit gestellt werden, gleich oder voneinander verschieden sein können. Elektrochemisch hergestellte MOF umfassen beispielsweise eine Ausführungsform, gemäß der das Reaktionsmedium ein oder mehrere unterschiedliche Salze eines Metalls enthält und das in diesem Salz oder in diesen Salzen enthaltene Metallion zusätzlich durch anodische Oxidation mindestens einer dieses Metall enthaltenden Anode bereitgestellt wird. Ebenso kann das Reaktionsmedium ein oder mehrere unterschiedliche Salze mindestens eines Metalls enthalten und mindestens ein von diesen Metallen unterschiedliches Metall kann über anodische Oxidation als Metallion im Reaktionsmedium bereitgestellt werden.

Vorzugsweise wird im Zusammenhang mit der elektrochemischen Herstellung das mindestens eine Metallion durch anodische Oxidation mindestens einer der dieses mindestens eine Metall enthaltenden Anode bereitgestellt, wobei kein weiteres Metall über ein Metallsalz bereitgestellt wird.

Unabhängig von dessen Herstellung fällt das erhaltene MOF in pulverförmiger bzw. kristalliner Form an. Dieses kann als solches als Sorbens im erfindungsgemäßen Verfahren alleine oder zusammen mit anderen Sorbentien oder weiteren Materialien eingesetzt werden. Vorzugsweise geschieht dies als Schüttgut. Weiterhin kann das MOF in einen Formkörper umgewandelt werden. Bevorzugte Verfahren sind hierbei die Verstrangung oder Tablettierung. Bei der Formkörperherstellung können zum MOF weiterer Materialien, wie beispielsweise Binder, Gleitmittel oder andere Additive hinzugesetzt werden. Ebenso ist es denkbar, dass Mischungen von MOF und anderen Adsorbentien beispielsweise Aktivkohle als Formkörper hergestellt werden oder getrennt Formkörper ergeben, die dann als Formkörpermischungen eingesetzt werden.

Hinsichtlich der möglichen Geometrien dieser MOF Formkörper existieren im Wesentlichen keine Beschränkungen. Beispielsweise sind unter anderem Pellets wie beispielsweise scheibenförmige Pellets, Pillen, Kugeln, Granulat, Extrudate wie beispielsweise Stränge, Waben, Gitter oder Hohlkörper zu nennen.

Zur Herstellung dieser Formkörper sind grundsätzlich sämtliche geeigneten Verfahren möglich. Es sind insbesondere folgende Verfahrensführungen bevorzugt:
- Kneten des Gerüstmaterials allein oder zusammen mit mindestens einem Bindemittel und/oder mindestens einem Anteigungsmittel und/oder mindestens einer Templatverbindung unter Erhalt eines Gemisches; Verformen des erhaltenen Gemisches mittels mindestens einer geeigneten Methode wie beispielsweise Extrudieren; Optional Waschen und/oder Trocknen und/oder Calcinieren des Extrudates; Optional Konfektionieren.
- Aufbringen des Gerüstmaterials auf mindestens ein gegebenenfalls poröses Trägermaterial. Das erhaltene Material kann dann gemäß der vorstehend beschriebenen Methode zu einem Formkörper weiterverarbeitet werden.
- Aufbringen des Gerüstmaterials auf mindestens ein gegebenenfalls poröses Substrat. Kneten und Verformen kann gemäß jedes geeigneten Verfahrens erfolgen, wie beispielsweise in Ullmanns Enzyklopädie der Technischen Chemie, 4. Auflage, Band 2, S. 313 ff. (1972) beschrieben, deren diesbezüglicher Inhalt durch Bezugnahme in den Kontext der vorliegenden Anmeldung vollumfänglich einbezogen wird.

Beispielsweise bevorzugt kann das Kneten und/oder Verformen mittels einer Kolbenpresse, Walzen presse in Anwesenheit oder Abwesenheit mindestens eines Bindermaterials, Compoundieren, Pelletieren, Tablettieren, Extrudieren, Co-Extrudieren, Verschäumen, Verspinnen, Beschichten, Granulieren, bevorzugt Sprühgranulieren, Versprühen, Sprühtrocknen oder einer Kombination aus zwei oder mehr dieser Methoden erfolgen.

Ganz besonders werden Pellets und/oder Tabletten hergestellt.

Das Kneten und/oder Verformen kann bei erhöhten Temperaturen wie beispielsweise im Bereich von Raumtemperatur bis 300 °C und/oder bei erhöhtem Druck wie beispielsweise im Bereich von Normaldruck bis hin zu einigen hundert bar und/oder in einer Schutzgasatmosphäre wie beispielsweise in Anwesenheit mindestens eines Edelgases, Stickstoff oder einem Gemisch aus zwei oder mehr davon erfolgen.

Das Kneten und/oder Verformen wird gemäß einer weiteren Ausführungsform unter Zugabe mindestens eines Bindemittels durchgeführt, wobei als Bindemittel grundsätzlich jede chemische Verbindung eingesetzt werden kann, die die zum Kneten und/oder Verformen gewünschte Viskosität der zu verknetenden und/oder verformenden Masse gewährleistet. Demgemäß können Bindemittel im Sinne der vorliegenden Erfindung sowohl Viskositätserhöhende als auch Viskositätserniedrigende Verbindungen sein.

Als unter anderem bevorzugte Bindemittel sind beispielsweise Aluminiumoxid oder Aluminiumoxid enthaltende Binder, wie sie beispielsweise in der WO 94/29408 beschrieben sind, Siliciumdioxid, wie es beispielsweise in der EP 0 592 050 A1 beschrieben ist, Mischungen ais Siliciumdioxid und Aluminiumoxid, wie sie beispielsweise in der WO 94/13584 beschrieben sind, Tonminerale, wie sie beispielsweise in der JP 03-037156 A beschrieben sind, beispielsweise Montmorillonit, Kaolin, Bentonit, Hallosit, Dickit, Nacrit und Anauxit, Alkoxysilane, wie sie beispielsweise in der EP 0 102 544 B1 beschrieben sind, beispielsweise Tetraalkoxysilane wie beispielsweise Tetramethoxysilan, Tetraethoxysilan, Tetrapropoxysilan, Tetrabutoxysilan, oder beispielsweise Trialkoxysilane wie beispielsweise Trimethoxysilan, Triethoxysilan, Tripropoxysilan, Tributoxysilan, Alkoxytitanate, beispielsweise Tetraalkoxytitanate wie beispielsweise Tetramethoxytitanat, Tetraethoxytitanat, Tetrapropoxytitanat, Tetrabutoxytitanat, oder beispielsweise Trialkoxytitanate wie beispielsweise Trimethoxytitanat, Triethoxytitanat, Tripropoxytitanat, Tributoxytitanat, Alkoxyzirkonate, beispielsweise Tetraalkoxyzirkonate wie beispielsweise Tetramethoxyzirkonat, Tetraethoxyzirkonat, Tetrapropoxyzirkonat, Tetrabutoxyzirkonat, oder beispielsweise Trialkoxyzirkonate wie beispielsweise Trimethoxyzirkonat, Triethoxyzirkonat, Tripropoxyzirkonat, Tributoxyzirkonat, Silikasole, amphiphile Substanzen und/oder Graphite zu nennen. Insbesondere bevorzugt ist Graphit.

Als viskositätssteigernde Verbindung kann beispielsweise auch, gegebenenfalls zusätzlich zu den oben genannten Verbindungen, eine organische Verbindung und/oder ein hydrophiles Polymer wie beispielsweise Cellulose oder ein Cellulosederivat wie beispielsweise Methylcellulose und/oder ein Polyacrylat und/oder ein Polymethacrylat und/oder ein Polyvinylalkohol und/oder ein Polyvinylpyrrolidon und/oder ein Polyisobuten und/oder ein Polytetrahydrofuran eingesetzt werden.

Als Anteigungsmittel kann unter anderem bevorzugt Wasser oder mindestens ein Alkohol wie beispielsweise ein Monoalkohol mit 1 bis 4 C-Atomen wie beispielsweise Methanol, Ethanol, n-Propanol, iso-Propanol, 1-Butanol, 2-Butanol, 2-Methyl-1-propanol oder 2-Methyl-2-propanol oder ein Gemisch aus Wasser und mindestens einem der genannten Alkohole oder ein mehrwertiger Alkohol wie beispielsweise ein Glykol, bevorzugt ein wassermischbarer mehrwertiger Alkohol, allein oder als Gemisch mit Wasser und/oder mindestens einem der genannten einwertigen Alkohole eingesetzt werden.

Weitere Additive, die zum Kneten und/oder Verformen eingesetzt werden können, sind unter anderem Amine oder Aminderivate wie beispielsweise Tetraalkylammonium-Verbindungen oder Aminoalkohole und Carbonat enthaltende Verbindungen wie etwa Calciumcarbonat. Solche weiteren Additive sind etwa in der EP 0 389 041 A1, der EP 0 200 260 A1 oder der WO 95/19222 beschrieben.

Die Reihenfolge der Additive wie Templatverbindung, Binder, Anteigungsmittel, viskositätssteigernde Substanz beim Verformen und Kneten ist grundsätzlich nicht kritisch.

Gemäß einer weiteren bevorzugten Ausführungsform wird der gemäß Kneten und/oder Verformen erhaltene Formkörper mindestens einer Trocknung unterzogen, die im Allgemeinen bei einer Temperatur im Bereich von 25 bis 300 °C, bevorzugt im Bereich von 50 bis 300 °C und besonders bevorzugt im Bereich von 100 bis 300 °C durchgeführt wird. Ebenso ist es möglich, im Vakuum oder unter Schutzgasatmosphäre oder durch Sprühtrocknung zu trocknen.

Gemäß einer besonders bevorzugten Ausführungsform wird im Rahmen dieses Trocknungsvorgangs mindestens eine der als Additive zugesetzten Verbindungen zumindest teilweise aus dem Formkörper entfernt.

Ein weiterer Gegenstand der Erfindung ist die Verwendung eines porösen metallorganischen Gerüstmaterials, welches mindestens eine an mindestens ein Metallion koordinativ gebundene, mindestens zweizähnige organische Verbindung enthält, zum absorptiven Aufnehmen von Flüssigkeiten.

Die vorliegende Erfindung soll anhand des nachfolgenden Beispiels näher erläutert werden.

### Beispiele

### Beispiel 1

In ein Schnappdeckelglas werden ein Rührfisch und ein MOF Pulver gegeben. In dieses Glas tropft man Toluol bis das Pulver verklumpt. Die Menge an Toluol, die bis zum Verklumpen aufgenommen wurde, ist in der nachfolgenden Tabelle aufgelistet.

Als MOF Materialien werden das auf elektrochemischem mit Benzol-1,3,5-tricarbonsäure (1,3,5-BTC) hergestellte Cu-MOF und IR-MOF-8 eingesetzt. Cu-MOF kann wie in WO-A2005/049892 angegeben auf elektrochemischem Wege hergestellt werden. IR-MOF-8 ist in WO-A02/088148 beschrieben.

| | Menge MOF | Menge Toluol | Aufnahme Toluol |
|---|---|---|---|
| | (g) | (g) | (%) |
| Cu-MOF | 0,530 | 0,764 | 144 |
| | 0,572 | 0,818 | 143 |
| | 0,528 | 0,768 | 145 |
| IR-MOF-8 | 0,564 | 0,710 | 125 |
| | 0,580 | 0,758 | 130 |
| | 0,433 | 0,525 | 121 |

### Beispiel 2 (Wasseraufnahme nach Fisher-Mottlau)

In Analogie zu Beispiel 1 wird Wasser zu einem AL-MOF (Terephthalsäure) und einem elektrochemisch hergestellten Cu-Isophthalsäure-MOF Material zugetropft. Die Menge an Wasser, die bis zum Verklumpen aufgenommen wurde, ist in der nachfolgenden Tabelle aufgelistet.

| | g Wasser / g MOF Pulver | g Wasser / ml Pulver |
|---|---|---|
| Al-MOF | 1,21 | 0,295 |
| Cu-Isophth.-MOF | 1,37 | 0,213 |

## Patentansprüche

1. Verfahren zum absorptiven Aufnehmen von Flüssigkeiten, den Schritt enthaltend
in Kontakt bringen der Flüssigkeit mit mindestens einem Sorbens enthaltend ein poröses metallorganisches Gerüstmaterial, wobei das Gerüstmaterial die Flüssigkeit aufnimmt und mindestens eine an mindestens ein Metallion koordinativ gebundene, mindestens zweizähnige organische Verbindung enthält, **dadurch gekennzeichnet, dass** eine Lache der Flüssigkeit mit dem mindestens einen Sorbens bedeckt wird, wobei Zn, Al oder Cu das Metallion und die mindestens zweizähnige organische Verbindung Isophthalsäure, 2,6-Naphthalindicarbonsäure, Terephthalsäure oder 1,3,5-Benzoltricarbonsäure ist.

2. Verfahren nach Anspruch 1, wobei die Flüssigkeit ein Desinfektionsmittel, ein Geruchsstoff, ein anorganisches oder organisches Lösemittel, Treibstoff, Hydraulik-, Kühler-, Bremsflüssigkeit oder ein Öl.

3. Verfahren nach Anspruch 2, wobei es sich bei dem Treibstoff um Benzin oder Diesel handelt.

4. Verfahren nach Anspruch 2, wobei es sich bei dem Öl um Maschinenöl handelt.

5. Verfahren nach einem der Ansprüche 1 bis 4, wobei die Flüssigkeit einen gegebenenfalls halogenierten aliphatischen oder aromatischen, cyclischen oder acyclischen Kohlenwasserstoff oder Mischungen hiervon enthält.

6. Verfahren nach einem der Ansprüche 1 bis 5, wobei die Flüssigkeit Aceton, Acetonitril, Anilin, Anisol, Benzol, Benzonitril, Brombenzol, Butanol, tert.-Butanol, Chinolin, Chlorbenzol, Chloroform, Cyclohexan, Diethylenglykol, Diethylether, Dimethylacetamid, Dimethylformamid, Dimethylsulfoxid, Dioxan, Eisessig, Essigsäureanhydrid, Essigsäureethylester, Ethanol, Ethylencarbonat, Ethylendichlorid, Ethylenglycol, Ethylenglycoldimethylether, Formamid, Hexan, Isopropanol, Methanol, Methoxypropanol, 3-Methyl-1-butanol, Methylenchlorid, Methylethylketon, N-Methyl-formamid, N-Methylpyrrolidon, Nitrobenzol, Nitromethan, Piperidin, Propanol, Propylencarbonat, Pyridin, Schwefelkohlenstoff, Sulfolan, Tetrachlorethen, Tetrachlorkohlenstoff, Tetrahydrofuran, Toluol, 1,1,1-Trichlorethan, Trichlorethylen, Triethylamin, Triethylenglycol, Triglyme, Wasser oder Mischungen hiervon enthält.

7. Verfahren nach einem der Ansprüche 1 bis 6, wobei das poröse metallorganische Gerüstmaterial mindestens eine der folgenden Eigenschaften aufweist:
a) spezifische Oberfläche > 5 m²/g (nach DIN 66131);
b) Porengröße des kristallinen MOF von 0,2 nm bis 30 nm;
c) Mindestens die Hälfte des Porenvolumens wird von Poren mit einem Porendurchmesser bis 1000 nm gebildet.

8. Verwendung eines porösen metallorganischen Gerüstmaterials, welches mindestens eine an mindestens ein Metallion koordinativ gebundene, mindestens zweizähnige organische Verbindung enthält, zum absorptiven Entfernen von Flüssigkeiten, wobei diese in Form von Flüssigkeitslachen vorliegen und wobei Zn, Al oder Cu das Metallion und die mindestens zweizähnige organische Verbindung Isophthalsäure, 2,6-Naphthalindicarbonsäure, Terephthalsäure oder 1,3,5-Benzoltricarbonsäure ist.

## Claims

1. A method for the absorption of liquids, which comprises the step
bringing the liquid into contact with at least one sorbent comprising a porous metal-organic framework, the framework taking up the liquid and comprising at least one at least bidentate organic compound having a coordinate bond to at least one metal ion, wherein a pool of the liquid is covered with the at least one sorbent, Zn, Al or Cu being the metal ion and the at least bidentate organic compound being isophthalic acid, 2,6-naphthalenedicarboxylic acid, terephthalic acid or 1,3,5-benzenetricarboxylic acid.

2. The method according to claim 1, the liquid being a disinfectant, an odoriferous substance, an inorganic or organic solvent, fuel, hydraulic, radiator or brake fluid or an oil.

3. The method according to claim 2, the fuel being gasoline or diesel.

4. The method according to claim 2, the oil being machine oil.

5. The method according to any of claims 1 to 4, the liquid comprising optionally halogenated aliphatic or aromatic, cyclic or acyclic hydrocarbon or a mixture thereof.

6. The method according to any of claims 1 to 5, the liquid comprising acetone, acetonitrile, aniline, anisole, benzene, benzonitrile, bromobenzene, butanol, teit-butanol, quinoline, chlorobenzene, chloroform, cyclohexane, diethylene glycol, diethyl ether, dimethylacetamide, dimethylformamide, dimethyl sulfoxide, dioxane, glacial acetic acid, acetic anhydride, ethyl acetate, ethanol, ethylene carbonate, ethylene dichloride, ethylene glycol, ethylene glycol dimethyl ether, formamide, hexane, isopropanol, methanol, methoxypropanol, 3-methyl-1-butanol, methylene chloride, methyl ethyl ketone, N-methylformamide, N-methylpyrrolidone, nitrobenzene, nitromethane, piperidine, propanol, propylene carbonate, pyridine, carbon disulfide, sulfolane, tetrachloroethene, carbon tetrachloride, tetrahydrofuran, toluene, 1,1,1-trichloroethane, trichloroethylene, triethylamine, triethylene glycol, triglyme, water or a mixture thereof.

7. The method according to any of claims 1 to 6, the porous metal-organic framework having at least one of the following properties:
a) specific surface area > 5 m²/g (according to DIN 66131);
b) pore size of the crystalline MOF from 0.2 nm to 30 nm;
c) at least half the pore volume is formed by pores having a pore diameter of up to 1000 nm.

8. The use of a porous metal-organic framework which comprises at least one at least bidentate organic compound having a coordinate bond to at least one metal ion for the removal of liquids by absorption, these being present in the form of liquid pools and Zn, Al or Cu being the metal ion and the at least bidentate organic compound being isophthalic acid, 2,6-naphthalenedicarboxylic acid, terephthalic acid or 1,3,5-benzenetricarboxylic acid.

## Revendications

1. Procédé de recueillement par absorption de liquides, contenant l'étape
mise en contact du liquide avec au moins un sorbant contenant un matériau de squelette métallo-organique poreux, le matériau de squelette recueillant le liquide et contenant au moins un composé organique au moins bidentate relié coordinativement à au moins un ion métallique, **caractérisé en ce qu'**une flaque du liquide est recouverte avec le ou les sorbants, Zn, Al ou Cu étant l'ion métallique et le composé organique au moins bidentate étant l'acide isophtalique, l'acide 2,6-naphtalinedicarboxylique, l'acide téréphtalique ou l'acide 1,3,5-benzènetricarboxylique.

2. Procédé selon la revendication 1, dans lequel le liquide est un agent désinfectant, une substance odorante, un solvant inorganique ou organique, un carburant, un liquide hydraulique, de refroidissement, de frein ou une huile.

3. Procédé selon la revendication 2, dans lequel le carburant est l'essence ou le diesel.

4. Procédé selon la revendication 2, dans lequel l'huile est une huile de machine.

5. Procédé selon l'une quelconque des revendications 1 à 4, dans lequel le liquide contient un hydrocarbure cyclique ou acyclique, aliphatique ou aromatique, éventuellement halogéné, ou leurs mélanges.

6. Procédé selon l'une quelconque des revendications 1 à 5, dans lequel le liquide contient de l'acétone, de l'acétonitrile, de l'aniline, de l'anisol, du benzène, du benzonitrile, du bromobenzène, du butanol, du tert.-butanol, de la quinoline, du chlorobenzène, du chloroforme, du cyclohexane, du diéthylène glycol, de l'éther diéthylique, du diméthylacétamide, du diméthylformamide, du diméthylsulfoxyde, du dioxane, de l'acide acétique glacial, de l'anhydride d'acide acétique, de l'ester éthylique d'acide acétique, de l'éthanol, du carbonate d'éthylène, du dichlorure d'éthylène, de l'éthylène glycol, de l'éther diméthylique d'éthylène glycol, du formamide, de l'hexane, de l'isopropanol, du méthanol, du méthoxypropanol, du 3-méthyl-1-butanol, du chlorure de méthylène, de la méthyléthylcétone, du N-méthylformamide, de la N-méthylpyrrolidone, du nitrobenzène, du nitrométhane, de la pipéridine, du propanol, du carbonate de propylène, de la pyridine, du sulfure de carbone, du sulfolane, du tétrachloroéthène, du tétrachlorure de carbone, du tétrahydrofurane, du toluène, du 1,1,1-trichloroéthane, du trichloroéthylène, de la triéthylamine, du triéthylène glycol, des triglymes, de l'eau ou leurs mélanges.

7. Procédé selon l'une quelconque des revendications 1 à 6, dans lequel le matériau de squelette métallo-organique poreux présente au moins une des propriétés suivantes :
a) une surface spécifique > 5 m²/g (selon DIN 66131) ;
b) une taille de pore du MOF cristallin de 0,2 nm à 30 nm ;
c) au moins la moitié du volume poreux est formée de pores ayant un diamètre de pore inférieur ou égal à 1 000 nm.

8. Utilisation d'un matériau de squelette métallo-organique poreux qui contient au moins un composé organique au moins bidentate relié coordinativement à au moins un ion métallique, pour l'élimination par absorption de liquides, ceux-ci se présentant sous la forme de flaques de liquide, et Zn, Al ou Cu étant l'ion métallique et le composé organique au moins bidentate étant l'acide isophtalique, l'acide 2,6-naphtalique, l'acide téréphtalique ou l'acide 1,3,5-benzènetricarboxylique.
